# EUROPEAN PATENT SPECIFICATION

(11) **EP 4 394 160 B1**
(45) Date of publication and mention of the grant of the patent: **26.02.2025**
(21) Application number: 22217225.6
(22) Date of filing: 29.12.2022
(51) Int. Cl.: F01B 1/06, F01B 9/06, F01L 1/42, F02B 57/08, F02B 75/22, F16C 29/04, F02B 75/32

(54) **ROTARY ENGINE**
ROTATIONSMOTOR
MOTEUR ROTATIF

(43) Date of publication of application: 03.07.2024
(73) Proprietor: Chang, Shih-Ho, Changhua City, Changhua County (TW); Chang, Han-Chih, Changhua City, Changhua County (TW); Chang, Hsin-Yu, Changhua City, Changhua County (TW)
(72) Inventor: CHANG, Shih-Ho, Changhua City, Changhua County (TW); CHANG, Han-Chih, Changhua City, Changhua County (TW)
(74) Representative: Lang, Christian

(56) References cited:
- DE-A1- 4 003 338
- US-A- 5 529 029
- US-A1- 2009 266 316
- US-A1- 2021 317 780
- US-B1- 11 060 450

## Description

### BACKGROUND OF THE INVENTION

### Field of the Invention

The present invention relates to a rotary engine.

### Description of the Prior Art

Nowadays, the engine plays an important role in the power demands of vehicles or other fields. Generally, the conventional engine performs intake, compression, power and exhaust strokes through the cooperation of the cylinder, piston, crankshaft, valve, to achieve a complete power cycle.

Document US 11 060 450 B1 discloses a cam-driven radial rotary engine, which basically specifies the features defined in the preamble of claim 1.

However, the manufacture and assembly of the structure and components of the conventional engine are very complicated and difficult. For example, the crankshaft needs to be designed as a curved shaft according to the number of pistons. Therefore, the piston moves up and down eccentrically, and thus there is great friction between the piston and the cylinder. As a result, the cylinder and piston are easy to wear and damage, and the crankshaft is easy to break. Moreover, at a power starting point when the power stroke starts, the piston rod and the crankshaft of the conventional engine are aligned with each other, so the power generated by the explosion is not efficiently transmitted so that the power cannot be fully output. In addition, the number of cylinders of the conventional engine is also greatly limited, so it cannot provide a large power output. In the present invention, a large shaft larger than the crankshaft of the conventional engine can be used in a rotary engine so that the rotary engine runs more smoothly and outputs greater power and so that an air supply hole can be formed in the large shaft, which allows the cooling air outside the rotary engine to enter the cylinder to cool the rotary engine effectively and quickly.

The present invention is, therefore, arisen to obviate or at least mitigate the above-mentioned disadvantages.

### SUMMARY OF THE INVENTION

The main object of the present invention is to provide a rotary engine which can carry out multiple power strokes during one rotation and provide greater power output.

To achieve the above and other objects, a rotary engine according to claim 1 is provided, including: a stator assembly, including an intake stator and an exhaust stator, the intake stator and the exhaust stator each including an annular guiding groove, the annular guiding groove of the intake stator and the annular guiding groove of the exhaust stator axially corresponding to each other and defining a track, the intake stator further including an annular intake groove, the exhaust stator further including an annular exhaust groove; a rotor, rotatably disposed between the intake stator and the exhaust stator, including a plurality of cylinders and a plurality of cylinder heads, each of the plurality of cylinders being covered by one of the plurality of cylinder heads, each of the plurality of cylinder heads including an intake port and an exhaust port, the intake port being connected to the annular intake groove, the exhaust port being connected to the annular exhaust groove; a shaft, inserted axially in the stator assembly and the rotor; a plurality of valve mechanisms, posited on the plurality of cylinder heads respectively and each including an intake valve configured to selectively close the intake port and an exhaust valve configured to selectively close the exhaust port; a plurality of pistons, received in the plurality of cylinders respectively and each including a piston rod which projects radially beyond one of the plurality of cylinders and is movable along the track, an intake starting point, a compression starting point, a power starting point and an exhaust starting point of each of the plurality of pistons being defined sequentially relatively based on the track; and a plurality of spark plugs, posited on the plurality of cylinder heads and exposed to interiors of the plurality of cylinders, respectively.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of a preferable embodiment of the present invention;
Fig. 2 is a breakdown drawing of a preferable embodiment of the present invention;
Fig. 3 is a partial breakdown drawing of a preferable embodiment of the present invention;
Fig. 4 is a drawing showing operation of a rotary engine of a preferable embodiment of the present invention;
Fig. 5 is a drawing showing a piston of a preferable embodiment of the present invention;
Figs. 6-8 are schematic diagrams of Fig. 4;
Fig. 9 is a partial cross-sectional view of a preferable embodiment of the present invention;
Fig. 10 is a cross-sectional view taken radially according to a preferable embodiment of the present invention;
Fig. 11 is a schematic diagram of Fig. 10;
Fig. 12 is a first side view of a preferable embodiment of the present invention;
Fig. 13 is a second side view of a preferable embodiment of the present invention;
Fig. 14 is a cross-sectional view taken radially according to another preferable embodiment of the present invention; and
Fig. 15 is a partial cross-sectional view of the another preferable embodiment of the present invention.

### DETAILED DESCRIPTION OF THE PREFERRED EMBODIMENTS

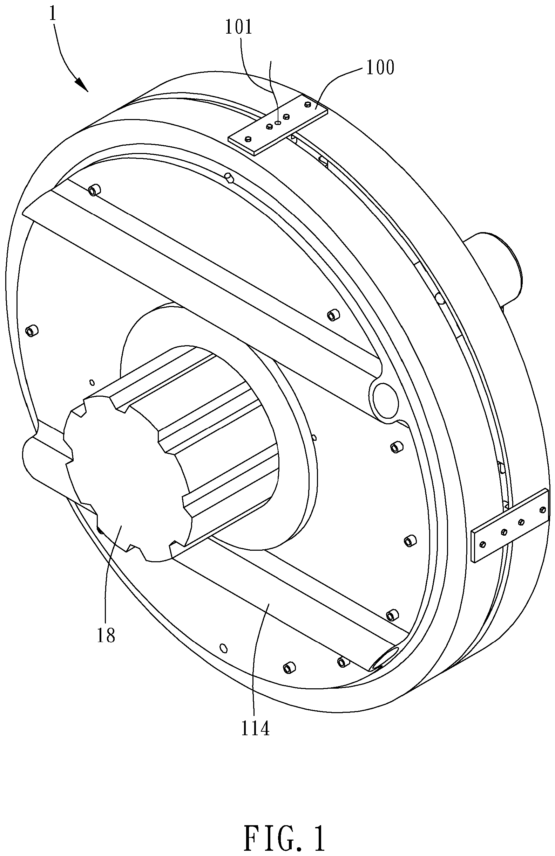

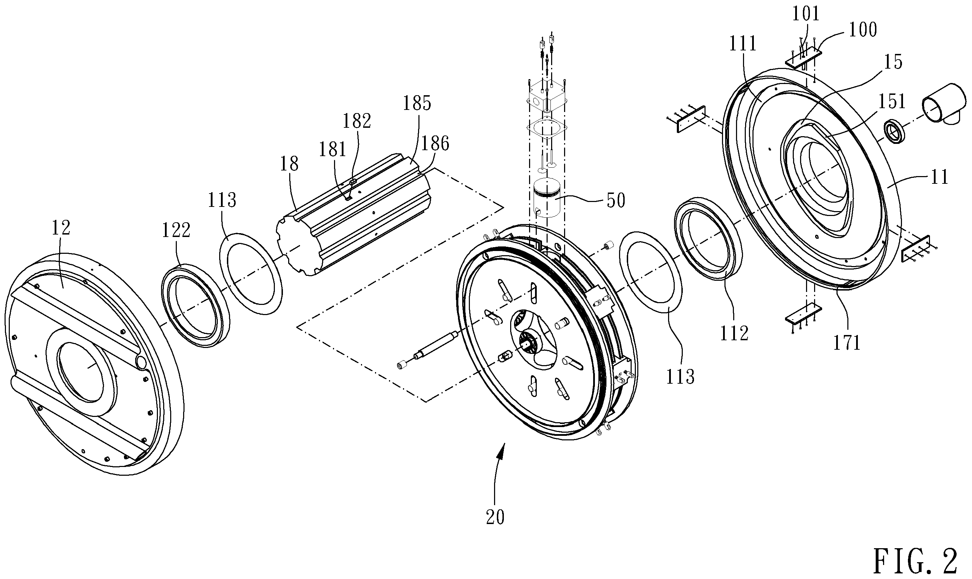

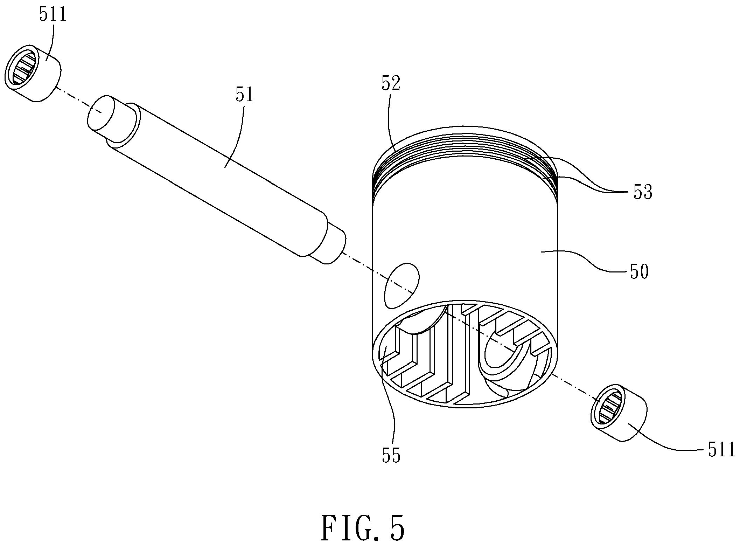

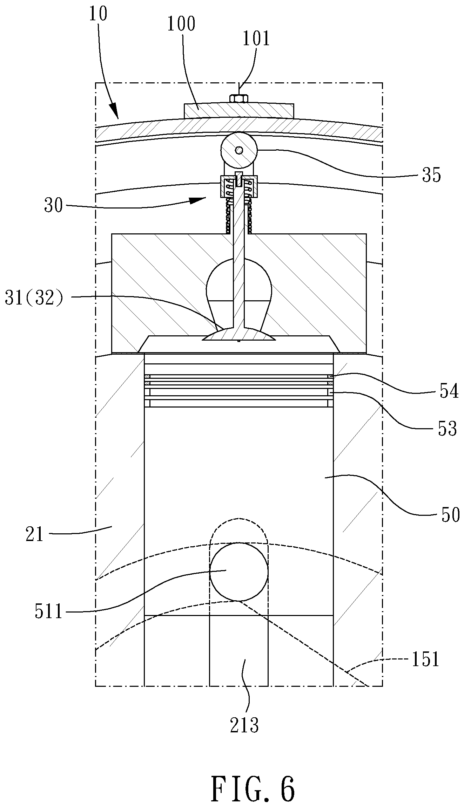

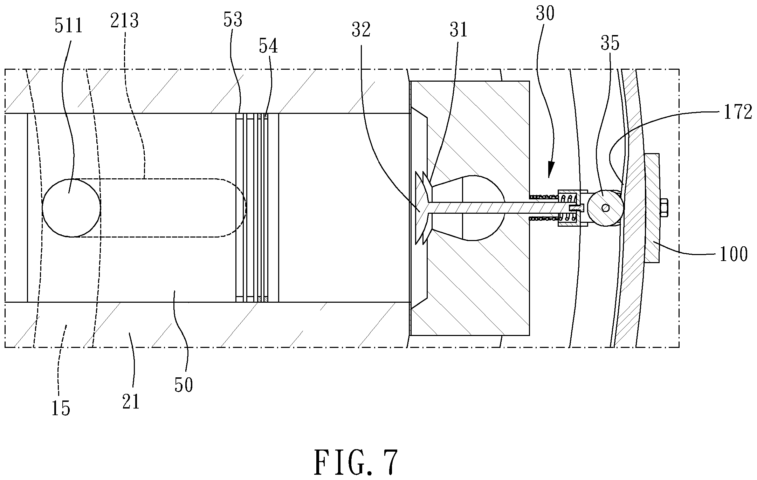

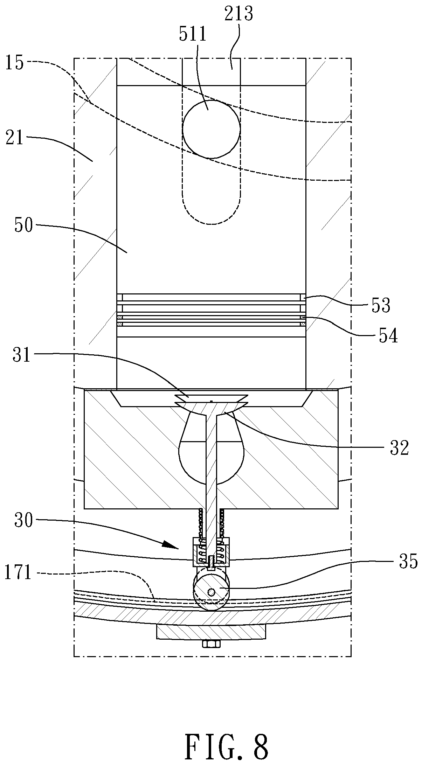

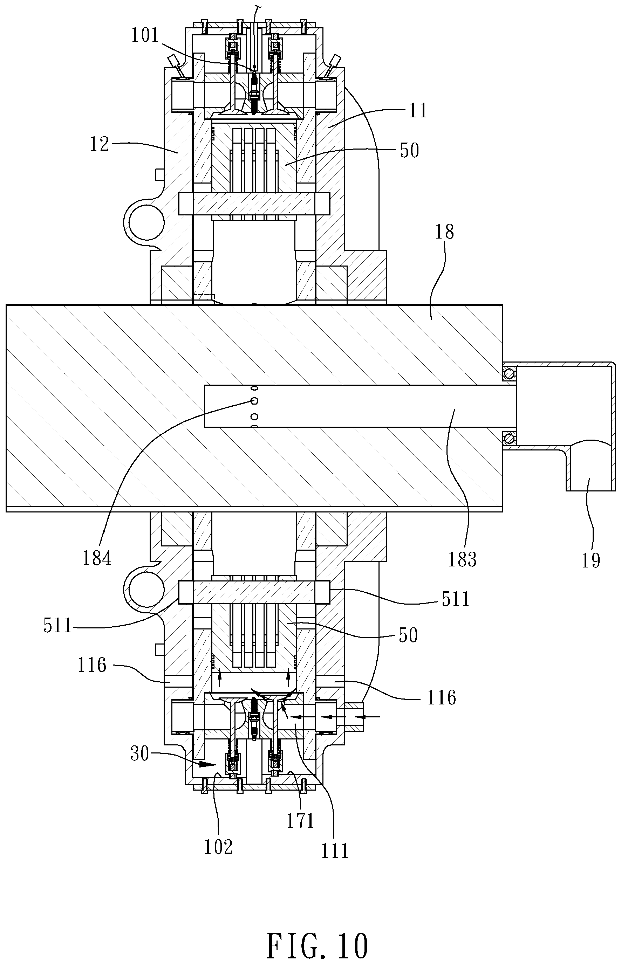

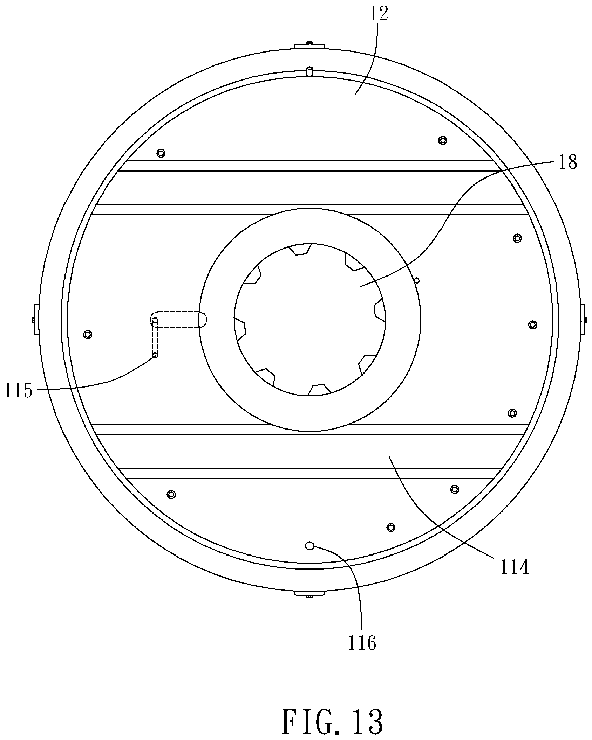

Please refer to Figs. 1 to 14 for a preferable embodiment of the present invention. A rotary engine 1 of the present invention includes a stator assembly 10, a rotor 20, a plurality of valve mechanisms 30, a plurality of pistons 50 and a plurality of spark plugs 60.

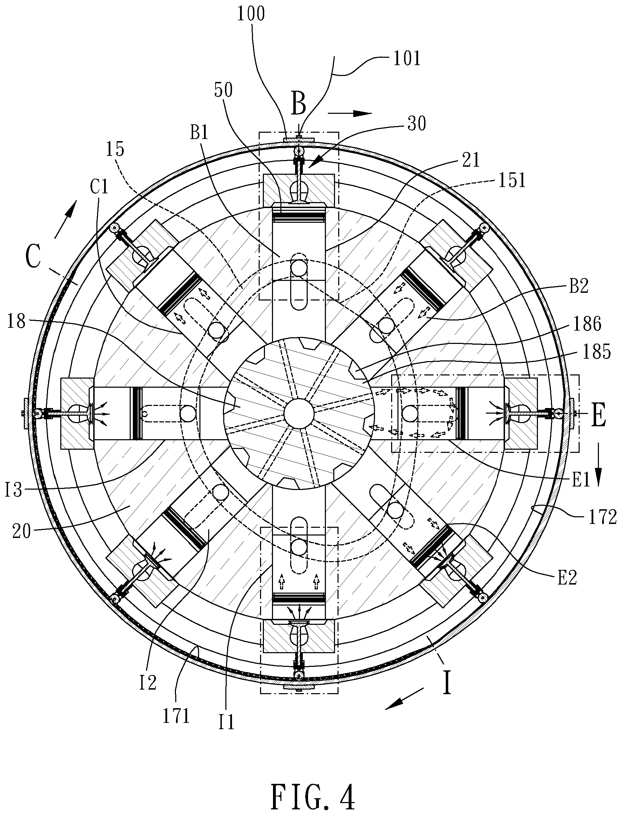

The stator assembly 10 includes an intake stator 11 and an exhaust stator 12. The intake stator 11 and the exhaust stator 12 each include an annular guiding groove 13, and the annular guiding groove 13 of the intake stator 11 and the annular guiding groove 13 of the exhaust stator 12 axially correspond to each other and define a track 15. The intake stator 11 further includes an annular intake groove 111, and the exhaust stator 12 further includes an annular exhaust groove 121. The rotor 20 is rotatably disposed between the intake stator 11 and the exhaust stator 12, and the rotor 20 includes a plurality of cylinders 21 and a plurality of cylinder heads 22. Each of the plurality of cylinders 21 is covered by one of the plurality of cylinder heads 22, and a cylinder gasket 23 is disposed between the cylinder head 22 and cylinder 21. Each of the plurality of cylinder heads 22 includes an intake port 221 and an exhaust port 222, the intake port 221 is connected to the annular intake groove 111, and the exhaust port 222 is connected to the annular exhaust groove 121. The plurality of valve mechanisms 30 are posited on the plurality of cylinder heads 22 respectively and each include an intake valve 31 configured to selectively close the intake port 221 and an exhaust valve 32 configured to selectively close the exhaust port 222. The plurality of pistons 50 are received in the plurality of cylinders 21 respectively and each include a piston rod 51 which projects radially beyond one of the plurality of cylinders 21 and is movable along the track 15. An intake starting point I, a compression starting point C, a power starting point B and an exhaust starting point E of each of the plurality of pistons 50 are sequentially defined relatively based on the track 15 (Fig. 4). The plurality of spark plugs 60 are posited on the plurality of cylinder heads 22 and exposed to interiors of the plurality of cylinders 21, respectively, for ignition at the power starting point B. The stator assembly 10 is fixedly connected to a fixation frame 100, and the fixation frame 100 includes a terminal 101. When each of the plurality of spark plugs 60 moves with the cylinder head 22 to correspondingly contact the terminal, it ignites. Whereby, there are multiple power strokes during one rotation of the rotor 20, which can provide greater power output.

Preferably, the track 15 includes an inclined section 151 in a location on its inner side corresponding to the power starting point B. The inclined section 151 allows the bearing 511 of the piston rod 51 to slide downward along the inclined section 151 smoothly at the power starting point B so that the explosion power can be maximally converted to the piston 50 to generate huge torque without decreasing the power conversion efficiency.

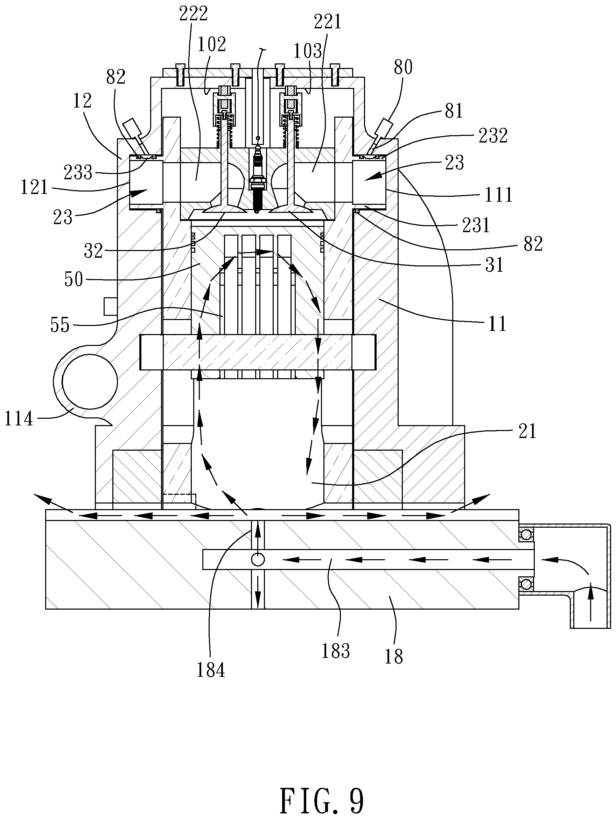

The rotor 20 further includes two annular chambers 23 (Fig. 9), and each of the two annular chambers 23 is defined by an inner annular wall 231 and an outer annular wall 232 inserted in the annular intake groove 111 and the annular exhaust groove 121, respectively. The outer annular wall 232 includes an annular reservoir 233 on an outer side thereof, the stator assembly 10 further includes a plurality of oiling holes 81 connected to at least one oil pot 80, and each of the plurality of oiling holes 81 is connected to the annular reservoir 233. Two seals 82 are engaged within the outer annular wall at two sides of the annular reservoir 233 and abutted against an inner surface of the annular guiding groove 13, so that the oil can be retained in the annular reservoir 233 and the two seals 82 help air sealing. The consumption of oil between the two seals 82 is little so that the oil pot 80 is sufficient to supply the oil required and to ensure formation of the sealing chamber. There are oiling holes 115 between the rotor 20 and the intake stator 11 and between the rotor 20 and the exhaust stator 12, which allows the oil to lubricate the piston 50 and the two seals 82 and enhances cooling of the rotary engine.

A shaft 18 is inserted axially in the stator assembly 10 and the rotor 20, and the shaft 18 and the rotor 20 include a key slot 181, respectively. A key 182 is keyed in the key slots of the shaft 18 and the rotor 20 so that the rotor 20 rotates in lock steps with the shaft 18.

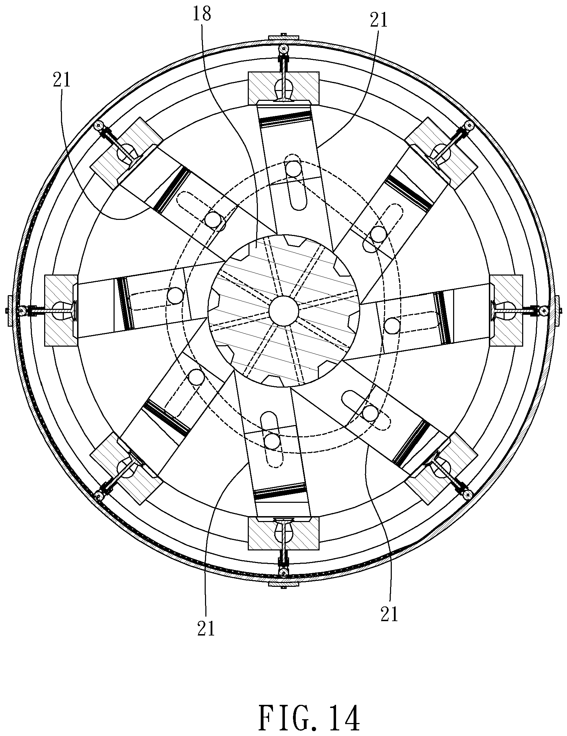

In an alternative embodiment (Fig. 14), the cylinders 21 are eccentrically arranged relative to the shaft 18.

A first bearing 112 is sleeved with and between the intake stator 11 and the shaft 18, and a second bearing 122 is sleeved with and between the exhaust stator 12 and the shaft 18. The shaft 18 includes an axial hole 183 (Fig. 9) and a plurality of radial holes 184 extending radially from the axial hole 183 and opened on an outer circumferential surface of the shaft 18, and each of the plurality of cylinders 21 is connected to at least one of the plurality of radial holes 184. The total area of cross-sections of the plurality of radial holes 184 is less than the cross-section of the axial hole 183 so that the airflow in each of the plurality of radial holes 184 is of high pressure and low flow velocity and so that the airflow ejects in high flow velocity from the radial holes 184, which effectively cools the piston and the cylinder. The axial hole 183 is configured to be connected to an air supply device such as a blower, for forcing the air to enter the cylinder 21, and thus the heat dissipation efficiency is high. Preferably, the shaft 18 is provided with a large size, which is beneficial to the stability of the engine, helps the heat transfer and cooling of the engine, is conducive to the large power output, and is beneficial to form the axial hole 183 (big air hole) and the plurality of radial holes 184 (small air hole) blowing the air to the piston 50. An air supply device 19 is provided at an end of the shaft 18, and the air supply device forces the cooling fluid to the plurality of radial holes 184 through the axial hole 183, to achieve better heat dissipation efficiency. The present invention is very suitable for the design and manufacture of a multi-cylinder engine which needs the most a large shaft to stabilize the engine and transmit power, and the rotary engine 1 just fits requirement of the large shaft. Specifically, the shaft 18 further includes a plurality of ribs 185 extending axially on the outer circumferential surface, neighboring two of the plurality of ribs 185, the stator assembly 10 and the rotor 20 define a groove 186, and each of the plurality of radial holes 184 is opened on one of the plurality of ribs 185. The groove 186 is connected to an outside of the rotary engine 1, which is beneficial for heat dissipation.

Preferably, two steel sheets 113 are interposed between the intake stator 11 and the rotor 20 and between the exhaust stator 12 and the rotor 20, respectively. The two steel sheets 113 are radially protruding beyond the first bearing 112 and the second bearing 122, respectively. The two steel sheets113 are configured to keep the gaps and to block the oil from flowing to the shaft 18. Centrifugal force prevents the oil in the cylinder 21 from flowing to the shaft 18. Only when the engine stops, the oil is able to flow to the shaft 18; however, as the engine starts again, the oil will be thrown outward. The two steel sheets 113 each can act as a barrier to prevent oil from easily entering the groove 186 of the shaft 18 and flowing out from the groove 186. In addition, with the spacer function of the two steel sheets 113, it avoids large-area friction between the rotor 20 and the intake stator 11 and between the rotor 20 and the exhaust stator 12, and avoids loss of kinetic energy.

Preferably, the stator assembly 10 further includes at least one cooling pipe 114 configured for receiving cooling medium, and the at least one cooling pipe 114 may be integrally formed as a part of at least one of the intake stator 11 and the exhaust stator 12. Preferably, the cooling pipe 114 is provided on the exhaust stator 12 and can be connected to the pipe receiving cooling medium, which can achieve an excellent heat dissipation effect.

In this embodiment, each of the plurality of cylinders 21 extends along a diametric direction of the rotor 20, which favors rotational balance, each of the plurality of cylinders 21 includes two guiding slots 213 which are disposed therethrough and diametrically correspond to each other and are configured to guide the piston rod 51. Two ends of each of the plurality of piston rods 51 are each sleeved with a bearing 511 received within the track 15, wherein the bearing 511 reduces friction considerably and allows the piston 50 to operate smoothly and efficiently.

An upper portion of each of the plurality of pistons 50 includes at least two ring receiving grooves 52 and at least one oil reservoiring groove 53 lower than the at least two ring receiving grooves 52, and at least two piston rings 54 are engaged within the at least two ring receiving grooves 52, respectively. The at least two piston rings 54 establish a good sealing between the piston 50 and the cylinder 21. Preferably, a (inner or outer) lower portion of each of the plurality of pistons 50 includes a plurality of piston heat dissipation fins 55, enhancing heat dissipation. The stator assembly 10 further includes a cylinder oiling hole 115 and a drain hole 116 (lower than the cylinder oiling hole, about six o'clock position in Fig. 14) connected to the track 15. The oil is poured into the at least one oil reservoiring groove 53 via the cylinder oiling hole 115, and thus there is sufficient quantity of oil for lubricating the piston 50 in the next high-load stroke (compression stroke and explosion stroke). When the rotor 20 rotates and the cylinder oiling hole 115 and the oil reservoiring groove 53 of the piston 50 correspond to and are connected to each other, the oil contacts the piston 50, and the oil can enter the cylinder 21 because of the action of centrifugal force; when the oil entering the piston 50 is scraped back by the two piston rings 54, some oil can enter the gap between the rotor 20 and the intake stator 11 and the gap between the rotor 20 and the exhaust stator 12 via the guiding slots 213 of the cylinder, and the oil moves between an inner seal of the rotor 20 and the drain hole 116 because of the action of centrifugal force, and the oil can be drained from the drain hole 116, wherein the drain hole 116 is preferably located in a lower position, for example, almost next to the inner edge of the annular intake groove 111. The oil entering the at least one oil reservoiring groove 53 moves with the piston 50 and lubricates the cylinder 21. Repeatedly, the oil can lubricate the cylinder 21 and dissipate the heat from the piston 50 and the cylinder 21 to the outside of the system. In addition, a plurality of stator heat dissipation fins 118 may be provided on an axially-facing outer surface of the intake stator 11 to increase heat dissipation.

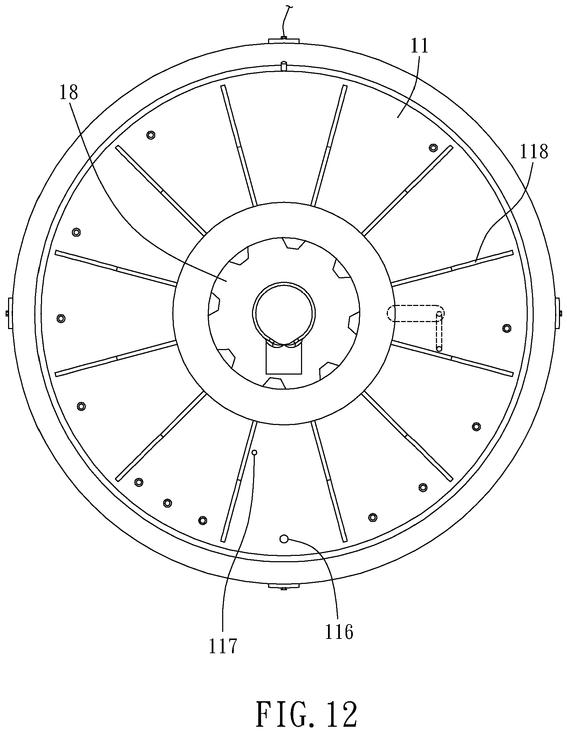

The stator assembly 10 further includes a track oiling hole 117 (in this embodiment, about six o'clock position in Fig. 12) connected to the track 15. A small amount of oil brought by the plurality of cylinders 21 enters the track 15 at a point about six o'clock position. Since the oil in the cylinder oiling hole 115 applied at the point about nine o'clock position 9 might not enter the track 15, it needs to pour some oil into the track 15.

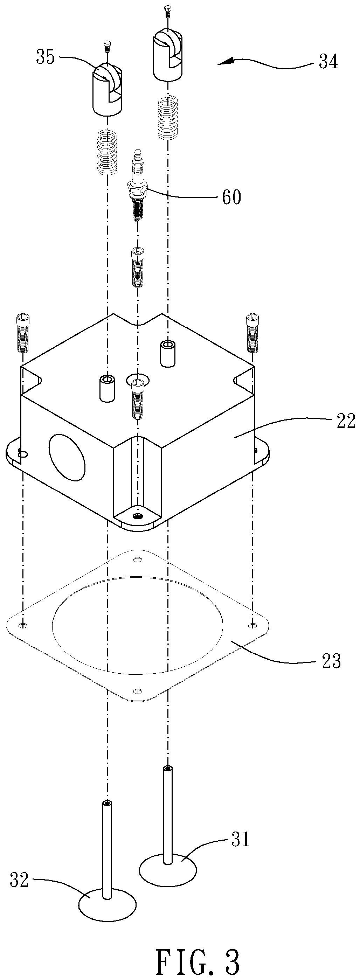

As illustrated in Figs. 3 and 6-11, each of the plurality of valve mechanisms 30 further includes a valve stem assembly 34 which is resiliently posited on the cylinder head 22 and includes a roller 35 abutted against the stator assembly 10. When the roller 35 moves with the rotor 20 and is urged by a raise posited on an outer circumferential surface of the stator assembly 10, the valve mechanism 30 is driven to open. Preferably, the roller 35 is partially received within an annular guiding groove posited on an inner circumferential surface of the stator assembly 10, which provides precise and stable guidance to the roller 35. The roller 35 is preferably a wheel made of high-strength rubber, which prevents and buffers the roller 35 from impacting hard against an intake raise 171 on the intake stator 11 or against an exhaust raise 172 on the exhaust stator 12 when the roller 35 is running at high speed.

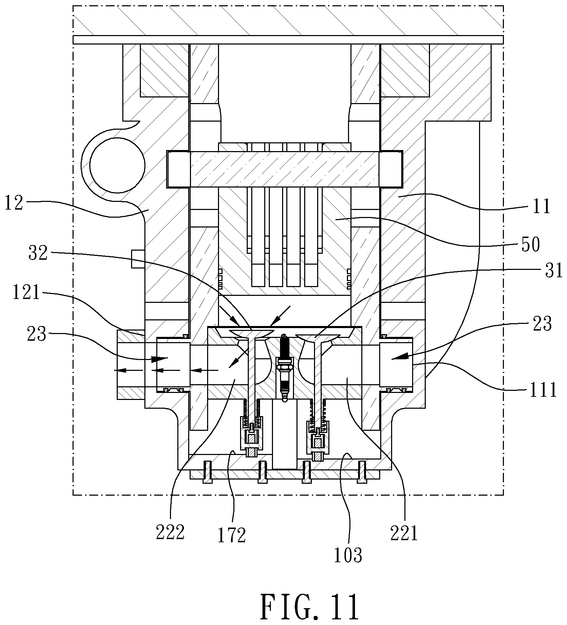

Please refer to Fig. 4, it shows the operation of rotary engine of the present invention. Combustion gas (mixture of air and fuel) is supplied, from the outside of the rotary engine 1, into the annular intake groove 111; the intake stroke (from I to C) is about 150 degrees; a first cylinder I1, a second cylinder I2 and a third cylinder I3 are within the intake stroke; there is none of exhaust raise 172 provided on an exhaust inner surface 102 of the exhaust stator 12, and the exhaust valve 32 is therefore in a closed state; when the intake valve 31 can be urged to open by the intake raise 171 posited on an intake inner surface 103 of the intake stator 11, and at the same time, the piston 50 moves along the track 15 from a top dead center to a bottom dead center so that the cylinder 21 carries out a 150-degree intake stroke (the intake raise 171 extends for 150 degrees) for entering sufficient combustion gas; when the intake stroke ends, the intake raise 171 on the intake inner surface 103 of the intake stator 11 does not correspond to the intake valve 31, the intake valve 31 is closed, and at the same time, the piston 50 moves along the track 15 from the bottom dead center to the top dead center to carry out the compression stroke (from C to B) for 60 degrees, wherein a fourth cylinder C1 in Fig. 4 is carrying out the compression stroke; when the compression stroke ends (B), then the spark plug 60 ignites to induce explosion to generate power, the power stroke (B to E) is carried out for about 90 degrees, wherein a fifth cylinder B1 and a sixth cylinder B2 in Fig. 4 are carrying out the power stroke, the piston 50 in the cylinder 21 moves along the inclined section 151 toward the bottom dead center, and since the piston 50 moves along the inclined section 151 of the track 15, it does not result in loss of the power generated so that the engine can generate a huge torque; when the power stroke ends (E), then the exhaust stroke (from E to I) is carried out for about 60 degrees (the exhaust raise 172 also extends for about 60 degrees), wherein a seventh cylinder E1 in Fig. 4 is carrying out the exhaust stroke, and at the same time, the exhaust raise 172 on the exhaust inner surface 102 of the exhaust stator 12 corresponds to the exhaust valve 32, the exhaust valve 32 is opened, the piston 50 moves along the track 15 toward the top dead center, exhaust gas in the cylinder 21 is discharged via the exhaust port 222 (Fig. 11); a eighth cylinder E2 in Fig. 4 is carrying out the last part of the exhaust stroke. The above are the basic intake, compression, power and exhaust strokes of an engine, wherein through the cooperation of the opening and closing of the plurality of valve mechanisms 30 at the appropriate timing, the individual actuation timings of all strokes can be controlled separately and precisely.

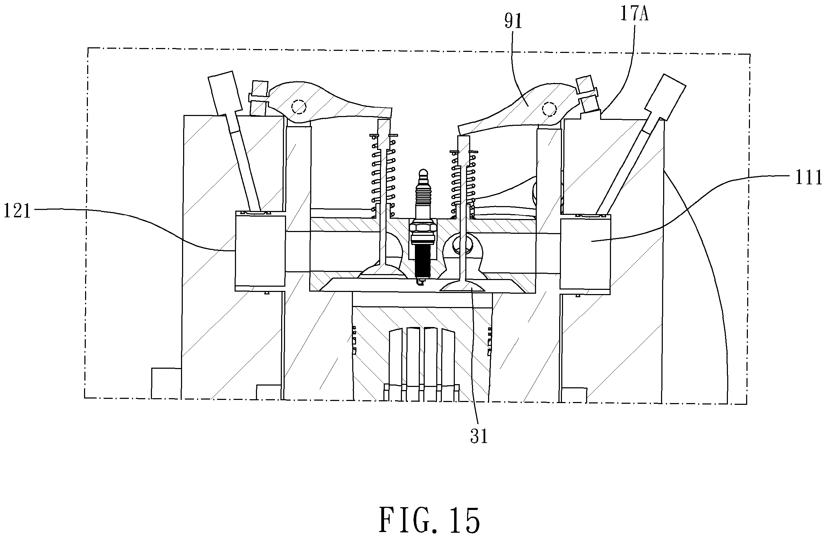

In another embodiment (Fig. 15), the two stators each include a raise 17A on the outer circumference thereof, for controlling the drag lever 91. When an end of the drag lever 91 is lifted by the raise 17A, the spring will be compressed, thereby controlling the opening and closing of the valve mechanism.

## Claims

1. A rotary engine (1), including:
a stator assembly (10), including an intake stator (11) and an exhaust stator (12), the intake stator (11) and the exhaust stator (12) each including an annular guiding groove (13), the annular guiding groove (13) of the intake stator (11) and the annular guiding groove (13) of the exhaust stator (12) axially corresponding to each other and defining a track (15), the intake stator (11) further including an annular intake groove (111), the exhaust stator (12) further including an annular exhaust groove (121);
a rotor (20), rotatably disposed between the intake stator (11) and the exhaust stator (12), including a plurality of cylinders (21) and a plurality of cylinder heads (22), each of the plurality of cylinders (21) being covered by one of the plurality of cylinder heads (22), each of the plurality of cylinder heads (22) including an intake port (221) and an exhaust port (222), the intake port (221) being connected to the annular intake groove (111), the exhaust port (222) being connected to the annular exhaust groove (121);
a shaft (18), inserted axially in the stator assembly (10) and the rotor (20);
a plurality of valve mechanisms (30), posited on the plurality of cylinder heads (22) respectively and each including an intake valve (31) configured to selectively close the intake port (221) and an exhaust valve (32) configured to selectively close the exhaust port (222);
a plurality of pistons (50), received in the plurality of cylinders (21) respectively and each including a piston rod (51) which projects radially beyond one of the plurality of cylinders (21) and is movable along the track (15), an intake starting point (I), a compression starting point (C), a power starting point (B) and an exhaust starting point (E) of each of the plurality of pistons (50) being sequentially defined relatively based on the track (15); and
a plurality of spark plugs (60), posited on the plurality of cylinder heads (22) and exposed to interiors of the plurality of cylinders (21), respectively;
**characterized in that**
the annular intake groove (111) and the annular exhaust groove (121) extend annularly around the shaft (18) and annularly around the track (15); and
each of the plurality of valve mechanisms (30) further includes a valve stem assembly (34) which is resiliently posited on the cylinder head (22) and includes a roller (35) abutted against the stator assembly (10), and when the roller (35) moves with the rotor (20) and is urged by a raise (171, 172, 17A) posited on an outer circumferential surface of the stator assembly (10), the valve mechanism (30) is driven to open.

2. The rotary engine (1) of claim 1, wherein each of the plurality of cylinders (21) extends along a diametric direction of the rotor (20).

3. The rotary engine (1) of claim 1, wherein two ends of each of the plurality of piston rods (51) are each sleeved with a bearing (511) received within the track (15).

4. The rotary engine (1) of claim 1, wherein each of the plurality of cylinders (21) includes two guiding slots (213) which are disposed therethrough and diametrically correspond to each other and are configured to guide the piston rod (51).

5. The rotary engine (1) of claim 4, wherein an upper portion of each of the plurality of pistons (50) includes at least two ring receiving grooves (52) and at least one oil reservoiring groove (53) lower than the at least two ring receiving grooves (52), at least two piston rings (54) are engaged within the at least two ring receiving grooves (52) respectively, the stator assembly (10) further includes a cylinder oiling hole (115), and the cylinder oiling hole (115) is connected to one of the two guiding slots (213) and corresponds to the at least one oil reservoiring groove (53).

6. The rotary engine (1) of claim 1, wherein a lower portion of each of the plurality of pistons (50) includes a plurality of piston heat dissipation fins (55).

7. The rotary engine (1) of claim 4, wherein the stator assembly (10) further includes a track oiling hole (117) connected to the track (15).

8. The rotary engine (1) of claim 1, wherein the stator assembly (10) further includes a drain hole (116) connected to the track (15).

9. The rotary engine (1) of claim 1, wherein the rotor (20) further includes two annular chambers (23), each of the two annular chambers (23) is defined by an inner annular wall (231) and an outer annular wall (232) inserted in the annular intake groove (111) and the annular exhaust groove (121), respectively, the outer annular wall (232) includes an annular reservoir (233) on an outer side thereof, and two seals (82) are engaged within the outer annular wall (232) at two sides of the annular reservoir (233) and abutted against an inner surface of the annular guiding groove (13).

10. The rotary engine (1) of claim 9, wherein the stator assembly (10) further includes a plurality of oiling holes (81) connected to at least one oil pot (80), and each of the plurality of oiling holes (81) is connected to the annular reservoir (233).

11. The rotary engine (1) of claim 1, wherein the shaft (18) includes an axial hole (183) extending axially and a plurality of radial holes (184) extending radially from the axial hole (183) and opened on an outer circumferential surface of the shaft (18), and each of the plurality of cylinders (21) is connected to at least one of the plurality of radial holes (184).

12. The rotary engine (1) of claim 11, wherein the shaft (18) further includes a plurality of ribs (185) extending axially on the outer circumferential surface, neighboring two of the plurality of ribs (185), the stator assembly (10) and the rotor (20) define a groove (186), and each of the plurality of radial holes (184) is opened one of the plurality of ribs (185).

13. The rotary engine (1) of claim 12, wherein a first bearing (112) is sleeved with and between the intake stator (11) and the shaft (18), and a second bearing (122) is sleeved with and between the exhaust stator (12) and the shaft (18); two steel sheets (113) are interposed between the intake stator (11) and the rotor (20) and between the exhaust stator (12) and the rotor (20), respectively, and the two steel sheets (113) are radially protrusive beyond the first bearing (112) and the second bearing (122), respectively.

14. The rotary engine (1) of claim 1, wherein each of the plurality of valve mechanisms (30) further includes a drag lever (91) which is pivotally connected to the rotor (20), the drag lever (91) includes a roller abutted against an outer circumferential surface of the stator assembly (10), and when the roller moves with the rotor (20) and is urged by the raise (17A) on the outer circumferential surface of the stator assembly (10), the drag lever (91) drives the valve stem assembly (34) to open.

## Patentansprüche

1. Rotationsmotor (1), welcher umfasst:
eine Statoranordnung (10), die einen Einlassstator (11) und einen Auslassstator (12) beinhaltet, wobei der Einlassstator (11) und der Auslassstator (12) jeweils eine ringförmige Führungsnut (13) beinhalten, wobei die ringförmige Führungsnut (13) des Einlassstators (11) und die ringförmige Führungsnut (13) des Auslassstators (12) axial miteinander korrespondieren und eine Spur (15) definieren, wobei der Einlassstator (11) ferner eine ringförmige Einlassnut (111) umfasst, wobei der Auslassstator (12) ferner eine ringförmige Auslassnut (121) umfasst;
einen Rotor (20), der drehbar zwischen dem Einlassstator (11) und dem Auslassstator (12) angeordnet ist, eine Vielzahl von Zylindern (21) und eine Vielzahl von Zylinderköpfen (22) umfasst, wobei jeder der Vielzahl von Zylindern (21) durch einen der Vielzahl von Zylinderköpfen (22) abgedeckt ist, wobei jeder der Vielzahl von Zylinderköpfen (22) einen Einlassanschluss (221) und einen Auslassanschluss (222) beinhaltet, wobei der Einlassanschluss (221) mit der ringförmigen Einlassnut (111) verbunden ist, wobei der Auslassanschluss (222) mit der ringförmigen Auslassnut (121) verbunden ist;
eine Welle (18), die axial in die Statoranordnung (10) und den Rotor (20) eingesetzt ist;
eine Vielzahl von Ventilmechanismen (30), die jeweils an der Vielzahl von Zylinderköpfen (22) angeordnet sind und jeweils ein Einlassventil (31), das zum selektiven Schließen des Einlassanschlusses (221) konfiguriert ist, und ein Auslassventil (32), das zum selektiven Schließen des Auslassanschlusses (222) konfiguriert ist, umfassen;
eine Vielzahl von Kolben (50), die jeweils in der Vielzahl von Zylindern (21) aufgenommen sind und jeweils eine Kolbenstange (51) umfassen, die radial über einen der Vielzahl von Zylindern (21) hinausragt und entlang der Spur (15) beweglich ist, wobei ein Einlassstartpunkt (I), ein Kompressionsstartpunkt (C), ein Leistungsstartpunkt (B) und ein Auslassstartpunkt (E) von jedem der Vielzahl von Kolben (50) relativ basierend auf der Spur (15) sequentiell definiert sind; und
eine Vielzahl von Zündkerzen (60), die an der Vielzahl von Zylinderköpfen (22) angeordnet sind und jeweils zu den Innenräumen der Vielzahl von Zylindern (21) exponiert sind;
**dadurch gekennzeichnet, dass**
sich die ringförmige Einlassnut (111) und die ringförmige Auslassnut (121) ringförmig um die Welle (18) und ringförmig um die Spur (15) erstrecken; und
jeder der Vielzahl von Ventilmechanismen (30) ferner eine Ventilschaftanordnung (34) umfasst, die elastisch an dem Zylinderkopf (22) angeordnet ist und eine Rolle (35) umfasst, die an der Statoranordnung (10) anliegt, wobei, wenn sich die Rolle (35) mit dem Rotor (20) bewegt und durch eine Erhöhung (171, 172, 17A), die an einer äußeren Umfangsfläche der Statoranordnung (10) angeordnet ist, verdrängt wird, der Ventilmechanismus (30) zum Öffnen angetrieben wird.

2. Rotationsmotor (1) nach Anspruch 1, bei welchem sich jeder der Vielzahl von Zylindern (21) entlang einer diametralen Richtung des Rotors (20) erstreckt.

3. Rotationsmotor (1) nach Anspruch 1, bei welchem zwei Enden von jeder der Vielzahl von Kolbenstangen (51) jeweils mit einem Lager (511) ummantelt sind, das in der Spur (15) aufgenommen ist.

4. Rotationsmotor (1) nach Anspruch 1, bei welchem jeder der Vielzahl von Zylindern (21) zwei Führungsschlitze (213) beinhaltet, die durch diesen hindurchgehend angeordnet sind und diametral miteinander korrespondieren und zum Führen der Kolbenstange (51) konfiguriert sind.

5. Rotationsmotor (1) nach Anspruch 4, bei welchem ein oberer Abschnitt von jedem der Vielzahl von Kolben (50) mindestens zwei Ringaufnahmenuten (52) und mindestens eine Ölspeichernut (53) umfasst, die tiefer liegt als die mindestens zwei Ringaufnahmenuten (52), wobei mindestens zwei Kolbenringe (54) jeweils in die mindestens zwei Ringaufnahmenuten (52) eingreifen, wobei die Statoranordnung (10) ferner ein Zylinderschmierloch (115) umfasst und das Zylinderschmierloch (115) mit einem der beiden Führungsschlitze (213) verbunden ist und mit der mindestens einen Ölspeichernut (53) korrespondiert.

6. Rotationsmotor (1) nach Anspruch 1, bei welchem ein unterer Abschnitt von jedem der Vielzahl von Kolben (50) eine Vielzahl von Kolbenwärmeableitungsrippen (55) aufweist.

7. Rotationsmotor (1) nach Anspruch 4, bei welchem die Statoranordnung (10) ferner ein mit der Spur (15) verbundenes Spurschmierloch (117) umfasst.

8. Rotationsmotor (1) nach Anspruch 1, bei welchem die Statoranordnung (10) ferner ein mit der Spur (15) verbundenes Abflussloch (116) umfasst.

9. Rotationsmotor (1) nach Anspruch 1, bei welchem der Rotor (20) ferner zwei ringförmige Kammern (23) umfasst, wobei jede der beiden ringförmigen Kammern (23) durch eine innere ringförmige Wand (231) und eine äußere ringförmige Wand (232) definiert ist, die jeweils in die ringförmige Einlassnut (111) und die ringförmige Auslassnut (121) eingesetzt sind, wobei die äußere ringförmige Wand (232) an einer Außenseite davon ein ringförmiges Reservoir (233) beinhaltet und zwei Dichtungen (82) an zwei Seiten des ringförmigen Reservoirs (233) in die äußere ringförmige Wand (232) eingreifen und an einer Innenfläche der ringförmigen Führungsnut (13) anliegen.

10. Rotationsmotor (1) nach Anspruch 9, bei welchem die Statoranordnung (10) ferner eine Vielzahl von Schmierlöchern (81) umfasst, die mit mindestens einem Öltopf (80) verbunden sind, wobei jedes der Vielzahl von Schmierlöchern (81) mit dem ringförmigen Reservoir (233) verbunden ist.

11. Rotationsmotor (1) nach Anspruch 1, bei welchem die Welle (18) ein axiales Loch (183), das sich axial erstreckt, und eine Vielzahl von radialen Löchern (184) umfasst, die sich radial von dem axialen Loch (183) erstrecken und an einer äußeren Umfangsfläche der Welle (18) offen sind, wobei jeder der Vielzahl von Zylindern (21) mit mindestens einem der Vielzahl von radialen Löchern (184) verbunden ist.

12. Rotationsmotor (1) nach Anspruch 11, bei welchem die Welle (18) ferner eine Vielzahl von Rippen (185) beinhaltet, die sich axial an der äußeren Umfangsfläche erstrecken, benachbart zu zwei der Vielzahl von Rippen (185), der Statoranordnung (10) und dem Rotor (20) eine Nut (186) definieren, und jedes der Vielzahl von radialen Löchern (184) an einer der Vielzahl von Rippen (185) offen ist.

13. Rotationsmotor (1) nach Anspruch 12, bei welchem ein erstes Lager (112) aufgesteckt und zwischen dem Einlassstator (11) und der Welle (18) angeordnet ist, und ein zweites Lager (122) aufgesteckt und zwischen dem Auslassstator (12) und der Welle (18) angeordnet ist; wobei zwei Stahlbleche (113) jeweils zwischen dem Einlassstator (11) und dem Rotor (20) und zwischen dem Auslassstator (12) und dem Rotor (20) angeordnet sind, wobei die beiden Stahlbleche (113) jeweils radial über das erste Lager (112) und das zweite Lager (122) hinausragen.

14. Rotationsmotor (1) nach Anspruch 1, bei welchem jeder der Vielzahl von Ventilmechanismen (30) ferner einen Schlepphebel (91) umfasst, der schwenkbar mit dem Rotor (20) verbunden ist, wobei der Schlepphebel (91) eine Rolle umfasst, die an einer äußeren Umfangsfläche der Statoranordnung (10) anliegt, und wobei, wenn sich die Rolle mit dem Rotor (20) bewegt und durch die Erhöhung (17A) an der äußeren Umfangsfläche der Statoranordnung (10) verdrängt wird, der Schlepphebel (91) die Ventilschaftanordnung (34) zum Öffnen antreibt.

## Revendications

1. Un moteur rotatif (1), incluant :
un ensemble de stators (10), incluant un stator d'admission (11) et un stator d'échappement (12), le stator d'admission (11) et le stator d'échappement (12) incluant chacun une rainure de guidage annulaire (13), la rainure de guidage annulaire (13) du stator d'admission (11) et la rainure de guidage annulaire (13) du stator d'échappement (12) correspondant axialement l'une à l'autre et définissant un chemin (15), le stator d'admission (11) incluant en outre une rainure d'admission annulaire (111), le stator d'échappement (12) incluant en outre une rainure d'échappement annulaire (121) ;
un rotor (20), disposé de manière rotative entre le stator d'admission (11) et le stator d'échappement (12), incluant une pluralité de cylindres (21) et une pluralité de culasses (22), chacun de la pluralité de cylindres (21) étant couvert par l'une de la pluralité de culasses (22), chacune de la pluralité de culasses (22) incluant un orifice d'admission (221) et un orifice d'échappement (222), l'orifice d'admission (221) étant relié à la rainure d'admission annulaire (111), l'orifice d'échappement (222) étant relié à la rainure d'échappement annulaire (121) ;
un arbre (18), inséré axialement dans l'ensemble de stators (10) et le rotor (20) ;
une pluralité de mécanismes à soupapes (30), positionnés sur la pluralité de culasses (22) respectivement et incluant chacun une soupape d'admission (31) configurée pour fermer sélectivement l'orifice d'admission (221) et une soupape d'échappement (32) configurée pour fermer sélectivement l'orifice d'échappement (222) ;
une pluralité de pistons (50), reçus dans la pluralité de cylindres (21) respectivement et incluant chacun une tige de piston (51) qui fait saillie radialement au-delà de l'un de la pluralité de cylindres (21) et est mobile le long du chemin (15), un point de départ d'admission (I), un point de départ de compression (C), un point de départ de puissance (B) et un point de départ d'échappement (E) de chacun de la pluralité de pistons (50) étant définis séquentiellement de manière relative sur la base du chemin (15) ; et
une pluralité de bougies d'allumage (60), positionnées sur la pluralité de culasses (22) et exposées à l'intérieur de la pluralité de cylindres (21), respectivement ;
**caractérisé en ce que**
la rainure d'admission annulaire (111) et la rainure d'échappement annulaire (121) s'étendent de manière annulaire autour de l'arbre (18) et de manière annulaire autour du chemin (15) ; et
chacun de la pluralité de mécanismes à soupapes (30) inclut en outre un ensemble tige de soupape (34) qui est positionné de manière résiliente sur la culasse (22) et inclut un rouleau (35) mis en butée contre l'ensemble de stators (10), et, lorsque le rouleau (35) se déplace avec le rotor (20) et est poussé par une surélévation (171, 172, 17A) positionnée sur une surface circonférentielle extérieure de l'ensemble de stators (10), le mécanisme à soupapes (30) est entraîné pour s'ouvrir.

2. Moteur rotatif (1) selon la revendication 1, dans lequel chacun de la pluralité de cylindres (21) s'étend le long d'une direction diamétrale du rotor (20).

3. Moteur rotatif (1) selon la revendication 1, dans lequel deux extrémités de chacune de la pluralité de tiges de piston (51) sont chacune manchonnées avec un palier (511) reçu dans le chemin (15).

4. Moteur rotatif (1) selon la revendication 1, dans lequel chacun de la pluralité de cylindres (21) inclut deux fentes de guidage (213) qui sont disposées à travers celui-ci et correspondent diamétralement l'une à l'autre et sont configurées pour guider la tige de piston (51).

5. Moteur rotatif (1) selon la revendication 4, dans lequel une partie supérieure de chacun de la pluralité de pistons (50) inclut au moins deux rainures de réception de segment (52) et au moins une rainure de réservoir d'huile (53) pllus basse que les au moins deux rainures de réception de segment (52), au moins deux segments de piston (54) sont engagés dans les au moins deux rainures de réception de segment (52) respectivement, l'ensemble de stators (10) inclut en outre un trou de graissage de cylindre (115), et le trou de graissage de cylindre (115) est relié à l'une des deux fentes de guidage (213) et correspond à au moins une rainure de réservoir d'huile (53).

6. Moteur rotatif (1) selon la revendication 1, dans lequel une partie inférieure de chacun de la pluralité de pistons (50) inclut une pluralité d'ailettes de dissipation de chaleur de piston (55).

7. Moteur rotatif (1) selon la revendication 4, dans lequel l'ensemble de stators (10) inclut en outre un trou de graissage de chemin (117) relié au chemin (15).

8. Moteur rotatif (1) selon la revendication 1, dans lequel l'ensemble de stators (10) inclut en outre un trou d'évacuation (116) relié au chemin (15).

9. Moteur rotatif (1) selon la revendication 1, dans lequel le rotor (20) inclut en outre deux chambres annulaires (23), chacune des deux chambres annulaires (23) étant définie par une paroi annulaire intérieure (231) et une paroi annulaire extérieure (232) insérées dans la rainure d'admission annulaire (111) et la rainure d'échappement annulaire (121), respectivement, la paroi annulaire extérieure (232) inclut un réservoir annulaire (233) sur un côté extérieur de celle-ci, et deux joints d'étanchéité (82) sont engagés dans la paroi annulaire extérieure (232) sur deux côtés du réservoir annulaire (233) et mis en butée contre une surface intérieure de la rainure de guidage annulaire (13).

10. Moteur rotatif (1) selon la revendication 9, dans lequel l'ensemble de stators (10) inclut en outre une pluralité de trous de graissage (81) reliés à au moins un pot d'huile (80), et chacun de la pluralité de trous de graissage (81) est relié au réservoir annulaire (233).

11. Moteur rotatif (1) selon la revendication 1, dans lequel l'arbre (18) inclut un trou axial (183) s'étendant axialement et une pluralité de trous radiaux (184) s'étendant radialement depuis le trou axial (183) et ouverts sur une surface circonférentielle extérieure de l'arbre (18), et chacun de la pluralité de cylindres (21) est relié à au moins un de la pluralité de trous radiaux (184).

12. Moteur rotatif (1) selon la revendication 11, dans lequel l'arbre (18) inclut en outre une pluralité de nervures (185) s'étendant axialement sur la surface circonférentielle extérieure, à proximité de deux de la pluralité de nervures (185), l'ensemble de stators (10) et le rotor (20) définissent une rainure (186), et chacun de la pluralité de trous radiaux (184) est ouvert sur l'une de la pluralité de nervures (185).

13. Moteur rotatif (1) selon la revendication 12, dans lequel un premier palier (112) est emmanché avec et entre le stator d'admission (11) et l'arbre (18), et un second palier (122) est emmanché avec et entre le stator d'échappement (12) et l'arbre (18) ; deux tôles d'acier (113) sont interposées entre le stator d'admission (11) et le rotor (20) et entre le stator d'échappement (12) et le rotor (20), respectivement, et les deux tôles d'acier (113) font saillie radialement au-delà du premier palier (112) et du second palier (122), respectivement.

14. Moteur rotatif (1) selon la revendication 1, dans lequel chacun de la pluralité de mécanismes à soupapes (30) inclut en outre un levier de traînée (91) qui est relié de manière pivotante au rotor (20), le levier de traînée (91) inclut un rouleau mis en butée contre une surface circonférentielle extérieure de l'ensemble de stators (10), et, lorsque le rouleau se déplace avec le rotor (20) et est poussé par la surélévation (17A) sur la surface circonférentielle extérieure de l'ensemble de stators (10), le levier de traînée (91) amène l'ensemble tige de soupape (34) à s'ouvrir.
